# EUROPEAN PATENT SPECIFICATION

(11) **EP 0 458 003 B1**
(45) Date of publication and mention of the grant of the patent: **15.02.1995**
(21) Application number: 90850203.2
(22) Date of filing: 22.05.1990
(51) Int. Cl.: B23B 27/14

(54) **Cutting insert**
Schneideinsatz
Plaquette de coupe

(43) Date of publication of application: 27.11.1991
(73) Proprietor: SECO TOOLS AB, S-773 01 Fagersta (SE)
(72) Inventor: Rivière, Bertrand, F-18000 Bourges (FR)
(74) Representative: Eriksson, Kjell

(56) References cited:
- EP-A- 0 084 223
- EP-A- 0 160 278
- DE-A- 1 901 921
- DE-C- 877 531

## Description

The present invention relates to a cutting insert for chip forming machining according to the pre-characterizing portion of claim 1, cf. EP-A-0 084 223.

In tools for metal cutting having indexable cutting inserts of hard and wear resistant material the cutting edges are subjected to wear and sometimes some part of or the entire cutting edge collapses. In smaller insert fractures only the cutting edge collapses without any risk for damage to the tool body. In larger insert fractures the risk of damage to the tool body increases to an essential degree. If the cutting insert has no shim an insert fracture often gives rise to damages of the tool body. In order to avoid such damages it is usual that the cutting insert rests on a shim of cemented carbide. A usual combination is a cutting insert having a thickness of about 5 mm and a shim having a thickness of 3 - 5 mm. This resultes in a total thickness of the cutting insert and the shim of 8 - 10 mm.

From EP-A-0 084 223 is previously known a cutting insert having a consumable self-regenerative ledge, said ledge including the cutting edge. However, since the ledge is consumed during use the cutting insert will have a gradually decreasing funtion to control the break of the cutting insert as the ledge is worn. This is not satisfactory from security aspects.

The aim of the present invention is to present a cutting insert that overcomes the disadvantages discussed above. This is realised by a cutting insert that has been given the characteristics of the appending claims.

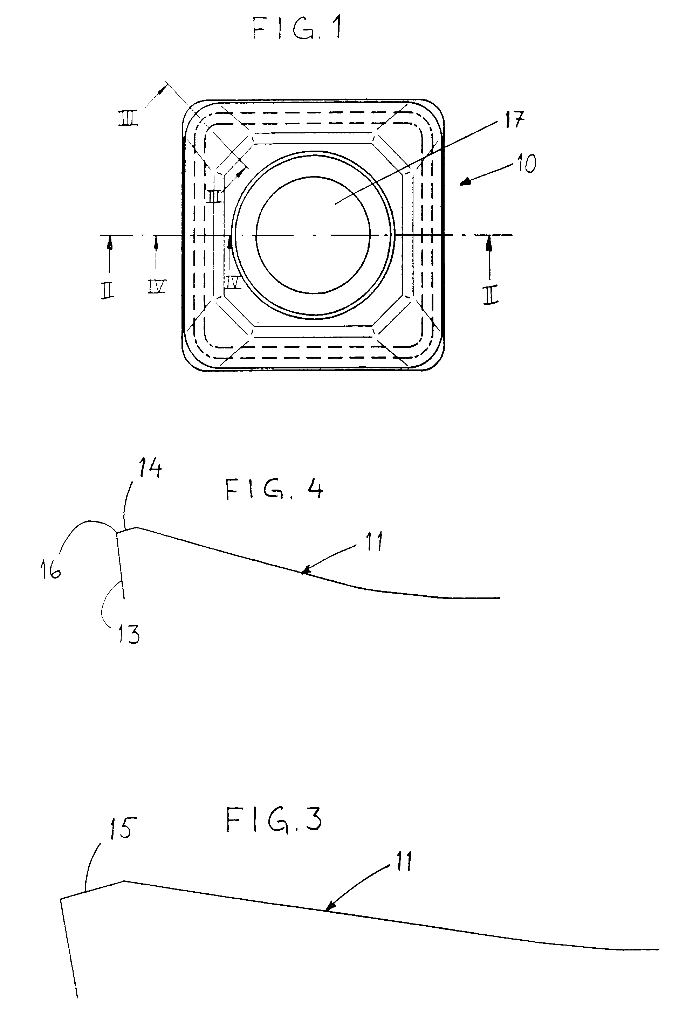

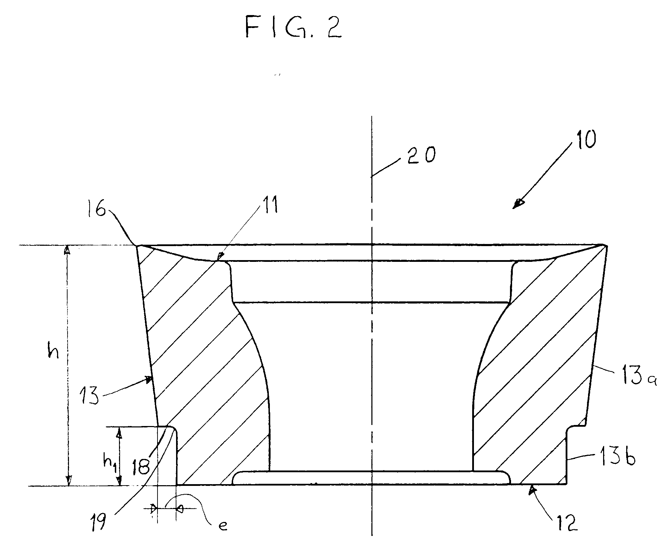

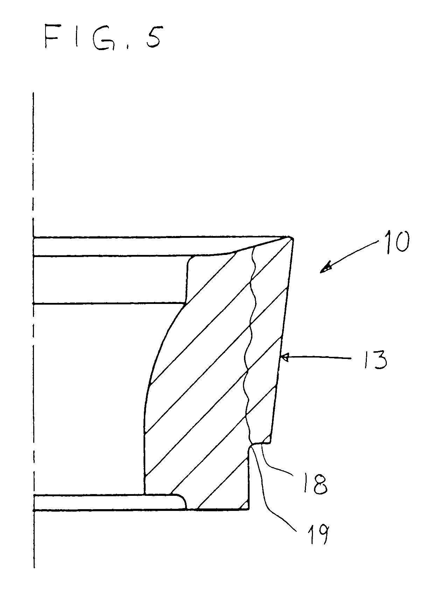

An embodiment of the cutting insert according to the invention is described below, reference being made to the accopanying drawing, where Fig.1 shows a top view of the cutting insert according to the present invention; Fig.2 shows a section along II-II in Fig.1; Fig.3 shows a section along III-III in Fig.1; Fig.4 shows a section along IV-IV in Fig.1; and Fig.5 shows schematically a fracture of a cutting edge.

The cutting insert 10 in Figs. 1 and 2 includes an upper face 11, a lower face 12 and edge faces 13 connecting the upper and lower faces 11, 12 resp.. The cutting insert 10 has a positive geometry, i.e. each edge surface 13 forms an acute angle with the upper face 11, said upper face 11 being a rake face and said edge faces 13 being clearance faces.

As can be learnt from Figs.3 and 4 the upper face 11 includes four first chip upsetting faces 14 located between the corner areas of the cutting insert 10. Further the upper face 11 includes four second chip upsetting faces 15 located in the corner areas of the cutting insert 10 and bridging the first chip upsetting faces 14. The chip upsetting faces 14 and 15 constitute the most peripheral part of the upper face 11. The intersecting lines between the chip upsetting faces 14 and the edge faces 13 form the main cutting edges 16.

In the disclosed embodiment the cutting insert 10 is provided with a through hole 17 intended to receive a clamping screw (not shown) that secures the cutting tool 10 to the tool holder.

As is most clearly shown in Fig.2 the edge surfaces 13 are provided with a step 18. The portion 13a of the edge surface 13 that is located above the step 18 has a positive geometry in order to provide the necessary clearance angle of the tool while the portion 13b of the edge surface 13 has a negative geometry, i.e. said portion 13b is perpendicular to the lower surface 12 and has a clearance angle of 0°. Since the cutting insert 10 has a square shape and is provided with four cutting edges 16 also four steps 18 are provided, said steps 18 preferably being parallel to the adherent cutting edge 16.

The step 18 provides a sharp inner corner 19 that constitutes an indication of fracture that by a possible break of the cutting edge controls the break and leaves the lower portion of the cutting insert undamaged, said lower portion 13b thus protecting the tool body. Such a break of the cutting edge is schematically shown in Fig.5.

The centre line of the cutting insert 10 is designated by 20.

Concerning the measures shown in Fig.2 the following is to be said. The height h₁ is 15 - 40% of the height h, preferably 25%. This is possible since the "shim" constitutes an integral part of the cutting insert 10, i.e. the height h₁ corresponds to the "shim". In order to achieve a good function of the cutting insert 10 it is necessary that the height h₁ does not constitute too big a part of the height h since in that case the strength of the cutting edge becomes too low. This results in fractures of the cutting edge also at small loads.

The radial extension of the step 18, defined by the measure e in Fig.2 depends on the height h₁ and the clearance angle. Said extension e is in the interval 0,2 - 2,5 mm, preferably in the interval 0,2 - 1,5 mm. A preferred value of e is in the magnitude of 0,5 mm.

Although the described embodiment of the invention refers to a cutting insert having positive geometry the invention is also applicable to cutting inserts having negative geometry.

The invention is in no way restricted to the embodiment described above but can be varied freely within the scope of the appending claims.

## Claims

1. Cutting insert (10) for chip forming machining, said cutting insert (10) including at least one cutting edge (16) created by the transition between an upper face (11) and an edge face (13) of the cutting insert (10), said upper face (11) being a rake face and said edge face (13) being a clearance face, whereby
along the cutting edge (16) the edge face (13) is provided with a step (18) being so designed that in a certain longitudinal cross-section of the cutting insert the distance from a centre line (20) of the cutting insert (10) to the periphery of the cutting insert (10), said distance being perpendicular to the centre line (20), is smaller below the step (18) than above the step (18), **characterized** in that the distance h₁ from a lower face (12) of the cutting insert (10) to the step (18) is 15 - 40 % of the distance h from the lower face (12) to the cutting edge (16), and that the step (18) forms a sharp corner (19) with the edge face portion (13b) below the step (18) to constitute an indication of fracture.

2. Cutting insert according to claim 1,
**characterized** in that the radial extension e of the step (18) is within the interval 0,2 - 2,5 mm.

3. Cutting insert according to claim 2,
**characterized** in that the radial extension e of the step (18) is within the interval 0,2 - 1,5 mm.

4. Cutting insert according to any of the preceding claims, **characterized** in that the distance h₁ is 25 % of the distance h.

5. Cutting insert according to any of the preceding claims, **characterized** in that the radial extension e of the step (18) is 0,5 mm.

6. Cutting insert according to any of the preceding claims, **characterized** in that the cutting insert (10) has a positive geometry above the step (18).

7. Cutting insert according to any of the preceding claims, **characterized** in that the edge face portion 13b below the step (18) is perpendicular to the lower face (12).

8. Cutting insert according to any of the preceding claims, **characterized** in that the step (18) is parallel with the adherent cutting edge (16).

## Patentansprüche

1. Schneideinsatz (10) für spanbildende Bearbeitung, wobei der Schneideinsatz (10) mindestens eine Schneidkante (16) aufweist, welche durch den Übergang zwischen einer oberen Fläche (11) und einer Kantenfläche (13) des Schneideinsatzes (10) gebildet wird, wobei die obere Fläche (11) eine Spanfläche und die Kantenfläche (13) eine Freifläche ist, wobei die Kantenflache (13) entlang der Schneidkante (16) mit einer Stufe (18) versehen ist, welche so ausgebildet ist, daß bei einem bestimmten Längsquerschnitt des Schneideinsatzes der Abstand von einer Mittelline (20) des Schneideinsatzes (10) zu dem Umfang des Schneideinsatzes (10), wobei die Entfernung senkrecht zur Mittellinie (20) ist, unterhalb der Stufe (18) kleiner ist, als oberhalb der Stufe (18), **dadurch gekennzeichnet, daß** die Entfernung h₁ von einer unteren Fläche (12) des Schneideinsatzes (10) zur Stufe (18) 15 bis 40% der Entfernung h von der unteren Fläche (12) zur Schneidkante (16) beträgt und daß die Stufe (18) mit dem Kantenflächenteil (13b) unterhalb der Stufe (18) eine scharfe Ecke (19) bildet, um eine Bruchanzeige zu bilden.

2. Schneideinsatz nach Anspruch 1, **dadurch gekennzeichnet, daß** die radiale Ausdehnung e der Stufe (18) innerhalb des Intervalls 0,2 bis 2,5 mm liegt.

3. Schneideinsatz nach Anspruch 2, **dadurch gekennzeichnet, daß** die radiale Ausdehnung e der Stufe (18) innerhalb des Intervalls 0,2 bis 1,5 mm liegt.

4. Schneideinsatz nach einem der vorhergehenden Ansprüche, **dadurch gekennzeichnet, daß** der Abstand h₁ 25% des Abstandes h beträgt.

5. Schneideinsatz nach einem der vorhergehenden Ansprüche, **dadurch gekennzeichnet, daß** die radiale Ausdehnung e der Stufe (18) 0,5 mm beträgt.

6. Schneideinsatz nach einem der vorhergehenden Ansprüche, **dadurch gekennzeichnet, daß** der Schneideinsatz (10) oberhalb der Stufe (18) eine positive Geometrie hat.

7. Schneideinsatz nach einem der vorhergehenden Ansprüche, **dadurch gekennzeichnet, daß** der Kantenflächenteil (13b) unterhalb der Stufe (18) senkrecht zu der unteren Fläche (12) ist.

8. Schneideinsatz nach einem der vorhergehenden Ansprüche, **dadurch gekennzeichnet, daß** die Stufe (18) parallel zu der damit zusammenhängenden Schneidkante (16) ist.

## Revendications

1. Plaquette de coupe (10) pour usinage par enlèvement de copeaux, ladite plaquette de coupe (10) comprenant au moins une arête coupante (16) formée par la transition entre une face supérieure (11) et une face de flanc (13) de la plaquette de coupe (10), ladite face supérieure (11) étant une face active et ladite face de flanc (13) étant une face en dépouille, dans laquelle la face de flanc (13) est munie le long de l'arête coupante (16) d'un gradin (18) conçu d'une manière telle que dans une coupe transversale longitudinale donnée de la plaquette de coupe, la distance depuis un axe (20) de la plaquette de coupe (10) jusqu'à la périphérie de la plaquette de coupe (10), ladite distance étant perpendiculaire à l'axe (20), est plus courte au-dessous du gradin (18) qu'au-dessus du gradin (18), caractérisée en ce que la distance h₁ depuis une face inférieure (12) de la plaquette de coupe (10) jusqu'au gradin (18) est 15 à 40 % de la distance h depuis la face inférieure (12) jusqu'à l'arête coupante (16), et en ce que le gradin (18) forme un angle vif (19) avec la partie de face de flanc (13b) située au-dessous du gradin (18) afin de constituer une indication de fracture.

2. Plaquette de coupe selon la revendication 1, caractérisée en ce que l'étendue radiale e du gradin (18) est comprise entre 0,2 et 2,5 mm.

3. Plaquette de coupe selon la revendication 2, caractérisée en ce que l'étendue radiale e du gradin (18) est comprise entre 0,2 et 1,5 mm.

4. Plaquette de coupe selon l'une quelconque des revendications précédentes, caractérisée en ce que la distance h₁ est 25 % de la distance h.

5. Plaquette de coupe selon l'une quelconque des revendications précédentes, caractérisée en ce que l'étendue radiale e du gradin (18) est de 0,5 mm.

6. Plaquette de coupe selon l'une quelconque des revendications précédentes, caractérisée en ce que la plaquette de coupe (10) comporte une géométrie positive au-dessus du gradin (18).

7. Plaquette de coupe selon l'une quelconque des revendications précédentes, caractérisée en ce que la partie de face de flanc (13b) située au-dessous du gradin (18) est perpendiculaire à la face inférieure (12).

8. Plaquette de coupe selon l'une quelconque des revendications précédentes, caractérisée en ce que le gradin (18) est parallèle à l'arête coupante associée (16).
